# EUROPÄISCHE PATENTSCHRIFT

(11) **EP 2 304 558 B1**
(45) Veröffentlichungstag und Bekanntmachung des Hinweises auf die Patenterteilung: **07.09.2016**
(21) Anmeldenummer: 09771991.8
(22) Anmeldetag: 16.06.2009
(51) Int. Cl.: G06F 9/455

(54) **SYSTEM UND VERFAHREN ZUR FERNKOMMUNIKATION ZWISCHEN EINEM ZENTRALEN COMPUTER UND EINER MASCHINENSTEUERUNG**
SYSTEM AND METHOD FOR REMOTE COMMUNICATION BETWEEN A CENTRAL COMPUTER AND A MACHINE CONTROLLER
SYSTÈME ET PROCÉDÉ DE COMMUNICATION À DISTANCE ENTRE UN ORDINATEUR CENTRAL ET UNE COMMANDE DE MACHINE

(30) Priorität: 30.06.2008 DE 102008030317
(43) Veröffentlichungstag der Anmeldung: 06.04.2011
(73) Patentinhaber: TRUMPF Werkzeugmaschinen GmbH + Co. KG, 71254 Ditzingen (DE)
(72) Erfinder: BAUER, Klaus, 71254 Ditzingen (DE)
(74) Vertreter: Kohler Schmid Möbus Patentanwälte
(86) Internationale Anmeldenummer: PCT/DE2009/000834
(87) Internationale Veröffentlichungsnummer: WO 2010/000221

(56) Entgegenhaltungen:
- WO-A-2006/111376
- WO-A-2008/039625
- US-A1- 2004 267 866

## Beschreibung

Die Erfindung betrifft ein System zur Fernkommunikation zwischen einem zentralen Computer und mindestens einer Maschinensteuerung gemäß Oberbegriff von Anspruch 1. Die Erfindung betrifft weiterhin ein Verfahren zur Fernkommunikation zwischen einem zentralen Computer und mindestens einer Maschinensteuerung gemäß Oberbegriff von Anspruch 3.

Ein derartiges System und ein derartiges Verfahren sind beispielsweise durch die WO 2006/111376 A bekannt geworden.

Die globale Ausrichtung heutiger Maschinenhersteller mit weltweit ansässigen Kunden/Maschinenbetreibern macht es erforderlich, Wartungen, Fehlerdiagnosen und auch Reparaturen der Maschinen nicht nur direkt vor Ort, sondern immer häufiger per Fernzugriff durchführen zu können. In dieser Anmeldung werden unter dem Begriff "Maschinen" sämtliche Bearbeitungsanlagen, bspw. zur Laserbearbeitung, zum Stanzen oder Biegen, und Geräte, wie bspw. Laserstrahlquellen, Plasma- oder Induktionsgeneratoren, zusammengefasst. Die früher übliche Direkteinwahl von einem Servicecomputer über ein analoges Modem oder eine ISDN-Verbindung zu einer Maschine wird durch moderne Kommunikationstechniken, vor allem durch das sogenannte Virtual Private Network (abgekürzt VPN), das einen verschlüsselten Fernzugriff über das Internet ermöglicht, ersetzt. Ein Fernzugriff über VPN stellt hohe Anforderungen an die Infrastruktur und Sicherheit. Besonders problematisch ist die Tatsache, dass der Fernzugriff über VPN von der beim Maschinenbetreiber eingesetzten Technik abhängig ist. Eine einfache Universallösung auf der Seite des Maschinenherstellers wird dadurch behindert, dass es bisher nicht möglich ist, verschiedene VPN-Software gleichzeitig innerhalb eines Betriebssystems, bspw. auf einem Servicecomputer, einzusetzen.

Ein System und ein gattungsgemäßes Verfahren zur Fernkommunikation zwischen einem zentralen Computer und einer Maschinensteuerung sind beispielsweise aus der europäischen Patentanmeldung EP 1 715 395 A1 bekannt. Das in **Fig. 1** gezeigte vorbekannte Fernkommunikationssystem **1** umfasst einen zentralen Computer **5,** der nach außen durch eine Firewall **6** geschützt ist. Auf dem zentralen Computer 5 sind mehrere virtuelle Maschinen **7** installiert, die nebeneinander lauffähig sind und unterschiedliche Betriebssysteme und Anwendungsprogramme, vor allem Telepräsenz- und Virenschutzprogramme, aufweisen können. Für jede Maschinensteuerung 3 gibt es eine speziell konfigurierte virtuelle Maschine 7, über die die Kommunikationsverbindung **8** von dem zentralen Computer 5 zur Maschinensteuerung 3 hergestellt wird. Der Servicecomputer 2 ist nicht direkt mit der Maschinensteuerung 3 verbunden, sondern die Verbindung des Servicecomputers 2 erfolgt über den zentralen Computer 5, der über eine Kommunikationsverbindung **9** mit dem Servicecomputer 2 verbunden ist. In einer Datenbank **10,** die mit dem zentralen Computer 5 verbunden ist, sind sämtliche Daten (Einwahltechnik, Passwörter, VPN-Software) über den Kunden und die Maschine 4 gespeichert. Der zentrale Computer 5 ermittelt anhand der in der Datenbank 10 gespeicherten Daten die zugeordnete Kommunikationsverbindung 8 sowie die zugeordnete virtuelle Maschine 7 und stellt die Kommunikationsverbindung 8 von der virtuellen Maschine 7 zur Maschinensteuerung 3 her. Die Kommunikationsverbindung 9 zwischen dem Servicecomputer 2 und dem zentralen Computer 5 sowie die Kommunikationsverbindung 8 zwischen dem zentralen Computer 5 und der Maschinensteuerung 3 erfolgen über das Internet **11,** beispielsweise über eine gesicherte VPN-Verbindung.

Für einen Fernzugriff auf die Maschinensteuerung 3 der Maschine 4 stellt ein Servicemitarbeiter zunächst die Kommunikationsverbindung 9 zwischen seinem Servicecomputer 2 und dem zentralen Computer 5 her. Anhand der in der Datenbank 10 gespeicherten Daten ermittelt der zentrale Computer 5 die der Maschinensteuerung 3 zugeordnete Kommunikationsverbindung 8 und wählt die an die Maschinensteuerung 3 und die Kommunikationsverbindung 8 angepasste lauffähige virtuelle Maschine 7 für die Verbindung mit der Maschinensteuerung 3 aus und startet diese virtuelle Maschine 7. Über die Kommunikationsverbindung 8 führt der Servicemitarbeiter Funktionen der Maschinensteuerung 3 aus und/oder tauscht Daten zwischen der Maschinensteuerung 3 und dem zentralen Computer 5 aus.

Aus der eingangs genannten WO 2006/111376 A sind ein System und ein Verfahren zur Fernkommunikation bekannt, bei denen die virtuellen Maschinen bereits lauffähig in dem zentralen Computer eingebunden sind, d.h., sie müssen nur noch vom zentralen Computer gestartet werden. Aus den mehreren lauffähig eingebundenen virtuellen Maschinen, welche für unterschiedliche Arten von Maschinensteuerungen und Kommunikationsverbindungen ausgebildet sind, wird dann diejenige ausgewählt, die an die jeweilige Maschinensteuerung und an die jeweilige Kommunikationsverbindung angepasst ist.

Aus der WO 2008/039625 A ist es bekannt, dass Programme in einer virtuellen Maschine auf externe Geräte zugreifen, die einer anderen virtuellen Maschine zugeordnet sind.

Die Aufgabe der vorliegenden Erfindung besteht demgegenüber darin, ein System und ein Verfahren zur Fernkommunikation zwischen einem zentralen Computer und mindestens einer Maschinensteuerung dahingehend weiter zu entwickeln, dass der Speicherplatzbedarf des zentralen Computers verringert wird. Außerdem soll der Aufbau der "Fernkommunikationssitzung" zwischen dem zentralen Computer und der Maschinensteuerung auch ohne einen Servicecomputer erfolgen.

Diese Aufgabe wird erfindungsgemäß gelöst durch ein System zur Fernkommunikation zwischen einem zentralen Computer und mindestens einer Maschinensteuerung mit den Merkmalen von Anspruch 1. Da die Kommunikationsverbindung zwischen dem zentralen Computer und der Maschinensteuerung zunächst ohne einen Servicecomputer aufgebaut wird, können Softwareupdates und die Übermittlung von Maschinen- und Testdaten automatisch ohne die Verbindung eines Servicecomputers durchgeführt werden.

Der Fernzugriff auf die Maschinensteuerung erfolgt bei dem erfindungsgemäßen Fernkommunikationssystem nicht über die der Maschinensteuerung zugeordnete virtuelle Maschine, sondern über eine Kopie dieser virtuellen Maschine, die insbesondere von dem zentralen Computer aus einer geeigneten virtuellen Maschinenvorlage erzeugt und gestartet wird. Dadurch, dass nur eine Kopie gestartet wird, können gleichzeitig mehrere Fernzugriffe auf Maschinensteuerungen erfolgen, die derselben virtuellen Maschine zugeordnet sind. Jede Konfiguration einer virtuellen Maschine muss nur einmal im System, insbesondere auf dem zentralen Computer, gespeichert werden, kann aber mehrfach kopiert und als Kopie gestartet werden. Die Anzahl an Fernzugriffen, die derselben virtuellen Maschine zugeordnet sind, ist nur durch die Anzahl gleichzeitig möglicher Kommunikationsverbindungen zu dem zentralen Computer begrenzt.

Das Fernkommunikationssystem weist einen Servicecomputer auf, der über eine Kommunikationsverbindung mit dem zentralen Computer und über eine Remote-Verbindung mit der virtuellen Maschine verbindbar ist. Fernzugriffe auf die Maschinensteuerungen, wie bspw. Fehlerdiagnosen oder Reparaturen, müssen von einem Servicemitarbeiter ausgeführt werden und können nicht bedienerlos von dem zentralen Computer durchgeführt werden. Dadurch, dass der Servicecomputer nicht direkt, sondern über eine virtuelle Maschine und eine Remote-Verbindung mit der Maschinensteuerung verbunden ist, müssen auf dem Servicecomputer keine vertraulichen Informationen, wie bspw. Passwörter, gespeichert sein.

Erfindungsgemäß ist auf dem zentralen Computer eine weitere virtuelle Maschine vorgesehen, welche als Kopie der an die Maschinensteuerung und Kommunikationsverbindung angepassten virtuellen Maschinenvorlage ausgebildet ist. Dabei ist vorteilhaft ein weiterer Servicecomputer vorgesehen, der mit der weiteren virtuellen Maschine über eine weitere Remote-Verbindung verbindbar ist, wobei die weitere virtuelle Maschine außerdem über eine Remote-Verbindung mit der virtuellen Maschine verbindbar ist. Die Remote-Verbindung zwischen den virtuellen Maschinen ermöglicht, dass zwei Servicemitarbeiter (Primary und Secondary U-ser) über eine einzige Kommunikationsverbindung auf die Maschinensteuerung zugreifen können.

Der zentrale Computer weist vorteilhaft einen Datenserver auf oder ist mit einem Datenserver verbunden. Da die Fernkommunikation zwischen dem zentralen Computer, der Maschinensteuerung und dem Servicecomputer über eine virtuelle Maschine erfolgt, die nach dem Ende der Fernkommunikation gelöscht wird, werden auch auf der virtuellen Maschine gespeicherte Daten gelöscht. Auf dem Datenserver können bspw. Daten und Protokolle über Fernzugriffe auf Maschinensteuerungen zentral gespeichert werden.

Die Erfindung betrifft weiterhin ein Verfahren zur Fernkommunikation zwischen einem zentralen Computer und mindestens einer Maschinensteuerung mit den Merkmalen von Anspruch 3.

Der Aufbau der Kommunikationsverbindung zwischen dem zentralen Computer und der Maschinensteuerung erfolgt durch die Maschinensteuerung und nicht durch den Servicecomputer bzw. den zentralen Computer. Die zum Aufbau der Verbindung erforderlichen Identifizierungsdaten (Maschinenidentifikation, Betriebssystem, Anwendungsprogramme, Anlass) sind nicht in dem zentralen Computer oder einer daran angeschlossenen Datenbank gespeichert, sondern werden von der Maschinensteuerung an den zentralen Computer übermittelt. Diese Technologie bietet einen hohen Sicherheitsstandard, da keine sensiblen Kundendaten (Passwörter) gespeichert werden. Außerdem reduziert sich der Aufwand bei der Aktualisierung und Pflege der Kundendaten, da die Maschinensteuerung immer die aktuellen Identifizierungsdaten übermittelt. Da die Kommunikationsverbindung zwischen dem zentralen Computer und der Maschinensteuerung zunächst ohne einen Servicecomputer aufgebaut wird, können Softwareupdates und die Übermittlung von Maschinen- und Testdaten automatisch ohne die Verbindung eines Servicecomputers durchgeführt werden.

Um einen Fernzugriff auf die Maschinensteuerung ausführen zu können, wird zwischen der Maschinensteuerung und der virtuellen Maschine eine Remote-Verbindung hergestellt.

Damit ein Servicemitarbeiter von seinem Servicecomputer aus einen Fernzugriff auf die Maschinensteuerung ausführen kann, werden die Verbindungsdaten der virtuellen Maschine von dem zentralen Computer über eine Kommunikationsverbindung an den Servicecomputer übermittelt und mittels der Verbindungsdaten wird eine Remote-Verbindung zwischen dem Servicecomputer und dem virtuellen Desktop hergestellt.

In einer Weiterbildung der Erfindung erzeugt und startet der zentrale Computer eine weitere Kopie der an die Maschinensteuerung und die Kommunikationsverbindung angepassten virtuellen Maschinenvorlagen als weitere, zweite virtuelle Maschine auf dem zentralen Computer. Diese zweite virtuelle Maschine wird vorteilhaft über eine Remote-Verbindung mit der ersten virtuellen Maschine verbunden. Vorteilhafterweise wird ein weiterer Servicecomputer über eine Remote-Verbindung ebenfalls mit der zweiten virtuellen Maschine verbunden. Die Remote-Verbindung zwischen den virtuellen Maschinen ermöglicht, dass mehrere Servicemitarbeiter über eine einzige Kommunikationsverbindung auf die Maschinensteuerung zugreifen können.

In einer vorteilhaften Ausführungsform wird jede virtuelle Maschine nach Beenden der Fernkommunikation beendet und anschließend auf dem zentralen Computer gelöscht.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:

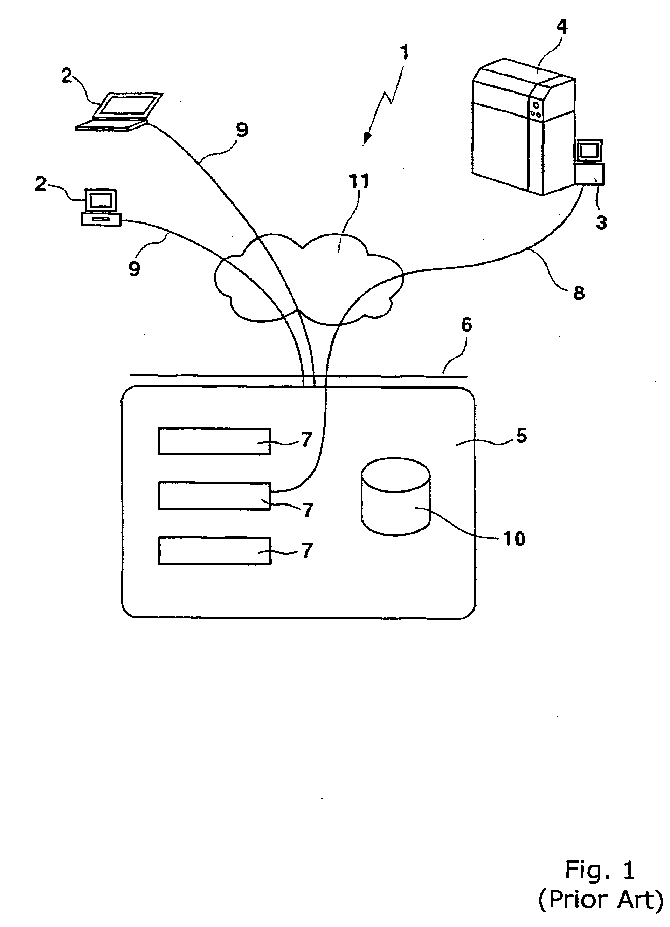

- Fig. 1: ein bekanntes Fernkommunikationssystem zwischen einem Service-computer und einer Maschinensteuerung unter Zwischenschaltung eines zentralen Computers;
- Fig. 2: ein erfindungsgemäßes Fernkommunikationssystem zwischen einem zentralen Computer, einer Maschinensteuerung und einem Service-computer;
- Fig. 3: ein erfindungsgemäßes Verfahren zur Fernkommunikation zwischen einer Maschinensteuerung, einem zentralen Computer und einem oder mehreren Servicecomputern bestehend aus drei Verfahrensabschnitten;
- Fign. 4a-c: die verschiedenen Verfahrensabschnitte des Fernkommunikationsverfahrens von Fig. 3 zur Fernkommunikation zwischen einer Maschinensteuerung und einem zentralen Computer (Fig. 4a), mit einem Servicecomputer als Primary User (Fig. 4b) und einem weiteren Servicecomputer als Secondary User (Fig. 4c); und
- Fig. 5: ein erfindungsgemäßes Verfahren zum Beenden der Fernkommunikation zwischen der Maschinensteuerung, dem zentralen Computer und einem oder mehreren Servicecomputern.

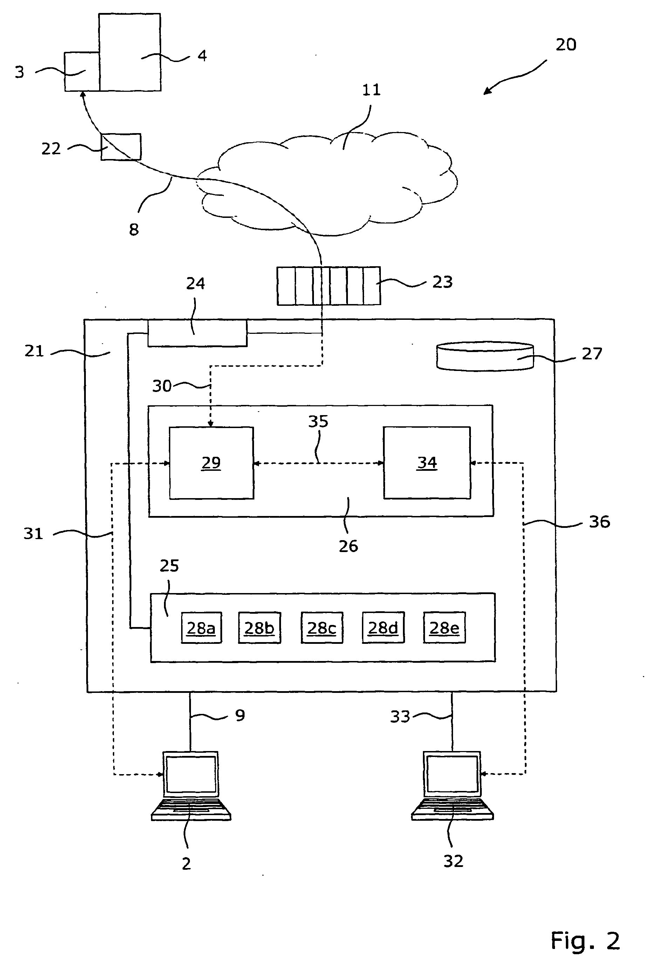

**Fig. 2** zeigt ein erfindungsgemäßes System **20** zur Fernkommunikation zwischen der Maschinensteuerung 3 einer Maschine 4, einem zentralen Computer **21** und einem Servicecomputer 2. Der zentrale Computer 21 und die Maschinensteuerung 3 sind durch eine Kommunikationsverbindung 8 verbunden und nach außen jeweils durch eine Sicherheitseinrichtung **22, 23** geschützt. Der Servicecomputer 2 ist nicht direkt mit der Maschinensteuerung 3 verbunden; die Verbindung erfolgt über den zentralen Computer 21, wobei der Servicecomputer 2 und der zentrale Computer 21 über eine Kommunikationsverbindung 9 verbunden sind.

Um eine hohe Bandbreite zu erzielen und einen sicheren Datentransfer zu gewährleisten, ist die Kommunikationsverbindung 8 zwischen der Maschinensteuerung 3 und dem zentralen Computer 21 als VPN-Internetverbindung ausgebildet. Die Sicherheitseinrichtung 22, die die Maschine 4 vor einem ungewollten Zugriff von außen schützen soll, ist bspw. als Telepräsenzbox "Eagle mGuard" oder PCI-Einsteckkarte "mGuard PCI" des Herstellers Innominate ausgebildet. Als Sicherheitseinrichtung 23 zum Schutz des zentralen Computers 21 ist bspw. ein VPN-Konzentrator "mGuard bladePack" des Herstellers Innominate vorgesehen. Die Kommunikationsverbindung 9 zwischen dem Servicecomputer 2 und dem zentralen Computer 21 ist als VPN-Internetverbindung oder, falls der Servicecomputer 2 in das Intranet des Maschinenherstellers bzw. Serviceunternehmens eingebunden ist, als Netzwerkverbindung ausgebildet.

Der zentrale Computer 21 weist einen Gateway-Manager **24,** einen Portalmanager **25,** einen VM-Server **26** und einen Datenserver **27** auf. Der Gateway-Manager 24 verwaltet die am zentralen Computer 21 eingehenden Kommunikationsverbindungen 8 der Maschinensteuerungen 3 zur Sicherheitseinrichtung 23 und leitet die Identifizierungsdaten der Maschinen 4 an den Portalmanager 25 weiter. Der Portalmanager 25 verwaltet die Verbindungsdaten der angeschlossenen Maschinen 4 und weist mehrere unterschiedliche virtuelle Maschinenvorlagen **28a-28e** auf. Für jede unterschiedliche Maschinensteuerung 3 gibt es eine unterschiedliche virtuelle Maschinenvorlage 28a-28d, die an das jeweilige Betriebssystem und die jeweiligen Software-Anwendungen der Maschinensteuerung 3, vor allem an die Telepräsenzsoftware und Virenschutzprogramme, angepasst ist. Die virtuelle Maschinenvorlage 28e ist so ausgebildet, dass eine daraus erstellte virtuelle Maschine über eine Remote-Verbindung mit einer auf dem VM-Server 26 angelegten virtuellen Maschine verbindbar ist. Da eine aus der virtuellen Maschinevorlage 28e erzeugte virtuelle Maschine nicht mit der Maschinensteuerung 3 verbunden werden soll, ist die virtuelle Maschinevorlage 28e unabhängig vom jeweiligen Betriebssystem und den jeweiligen Software-Anwendungen der Maschinesteuerung 3. Auf dem VM-Server 26 werden lauffähige virtuelle Maschinen angelegt und gestartet, über die der Zugriff auf die Maschinensteuerungen 3 erfolgt. Der Datenserver 27 ist als externer Speicher vorgesehen, um Daten von der Maschinensteuerung 3 oder auf die Maschinensteuerung 3 kopieren zu können.

Der Fernzugriff auf die Maschinensteuerung 3 erfolgt über eine virtuelle Maschine **29,** die durch Kopieren der zu der Maschinensteuerung 3 passenden virtuellen Maschinenvorlage, z.B. 28a, auf dem VM-Server 26 erzeugt wurde. Um einen Fernzugriff auf die Maschinensteuerung 3 durchführen zu können, ist zwischen der Maschinensteuerung 3 und der virtuellen Maschine 29 eine Remote-Verbindung **30** vorgesehen, die über die aktive Kommunikationsverbindung 8, die beispielsweise als VPN-Tunnel einer Sicherheitseinrichtung 23 (VPN-Konzentrator) ausgebildet ist, verläuft.

Der Servicecomputer 2 und der zentrale Computer 21 sind über die Kommunikationsverbindung 9 verbunden. Wenn der Servicecomputer 2 beim Portalmanager 25 die Verbindungsdaten der virtuellen Maschine 29 angefragt hat, wird zwischen dem Servicecomputer 2 und der virtuellen Maschine 29 eine Remote-Verbindung **31** aufgebaut. Da auch zwischen der virtuellen Maschine 29 und der Maschinensteuerung 3 eine Remote-Verbindung 30 besteht, erscheint auf dem Servicecomputer 2 der Bildschirm der Maschinensteuerung 3 und der Servicemitarbeiter kann Funktionen der Maschinensteuerung 3 ausführen.

Das Fernkommunikationssystem 20 von Fig. 2 weist neben dem Servicecomputer 2 einen zweiten Servicecomputer **32** auf, der über eine Kommunikationsverbindung **33** ebenfalls mit dem zentralen Computer 21 verbunden ist. Bei komplizierten Fehlerereignissen der Maschine 4 kann es erforderlich sein, dass ein Servicemitarbeiter weitere Unterstützung benötigt. Der Servicemitarbeiter, der zunächst die Remote-Verbindung 30 zu der Maschinensteuerung 3 herstellt, wird als Primary User bezeichnet. Der oder die weiteren Servicemitarbeiter, die in die Fernkommunikation zu der Maschinensteuerung 3 eingebunden werden, werden als Secondary User bezeichnet. Der Primary User legt die Zugriffsrechte des Secondary User fest und bestimmt, ob der Secondary User nur Leserechte erhält oder Funktionen der Maschinensteuerung 3 per Fernzugriff ausführen kann. Die Zugriffsrechte der Secondary User können voreingestellt bspw. nur Leserechte umfassen. Bei Bedarf kann der Primary User einem oder mehreren Secondary User weitere Zugriffsrechte einräumen.

Der Portalmanager 25 erstellt aus der virtuellen Maschinenvorlage 28e eine weitere virtuelle Maschine **34,** die auf dem VM-Server 26 angeordnet ist und über eine Remote-Verbindung **35** mit der virtuellen Maschine 29 des Primary User verbunden ist.

Zwischen dem weiteren Servicecomputer 32 und dem zentralen Computer 21 ist die Kommunikationsverbindung 33 vorgesehen, über die der weitere Servicecomputer 32 vom Portalmanager 25 die Verbindungsdaten der virtuellen Maschine 34 erhält. Der weitere Servicecomputer 32 baut eine Remote-Verbindung **36** zu der virtuellen Maschine 34 auf. Da zwischen der virtuellen Maschine 29 des Primary User und der virtuellen Maschine 34 des Secondary User eine Remote-Verbindung 35 besteht, sieht auch der weitere Servicemitarbeiter den Bildschirm der Maschinensteuerung 3. Da die virtuelle Maschine 34 des Secondary User auf dem VM-Server 26 über eine Remote-Verbindung 35 mit der virtuellen Maschine 29 des Primary User verbunden ist, ist nur eine Kommunikationsverbindung 8 zwischen der Maschinensteuerung 3 und dem zentralen Computer 21 erforderlich.

Der zentrale Computer 21 weist den Datenserver 27 auf, der im zentralen Computer 21 enthalten ist oder mit dem zentralen Computer 21 über eine Kommunikationsverbindung verbunden ist. Der Fernzugriff auf die Maschinensteuerung 3 erfolgt ausschließlich über virtuelle Maschinen 29, 34, die nach dem Ende der Fernkommunikation gelöscht werden, um den Speicherplatz für aktive Femkommunikationssitzungen vorzuhalten und nicht durch nicht-aktive virtuelle Maschinen zu blockieren.

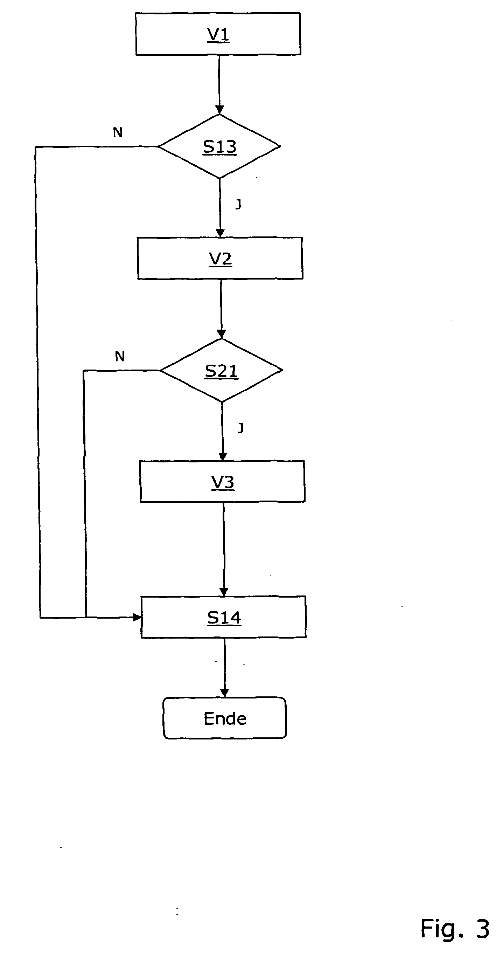

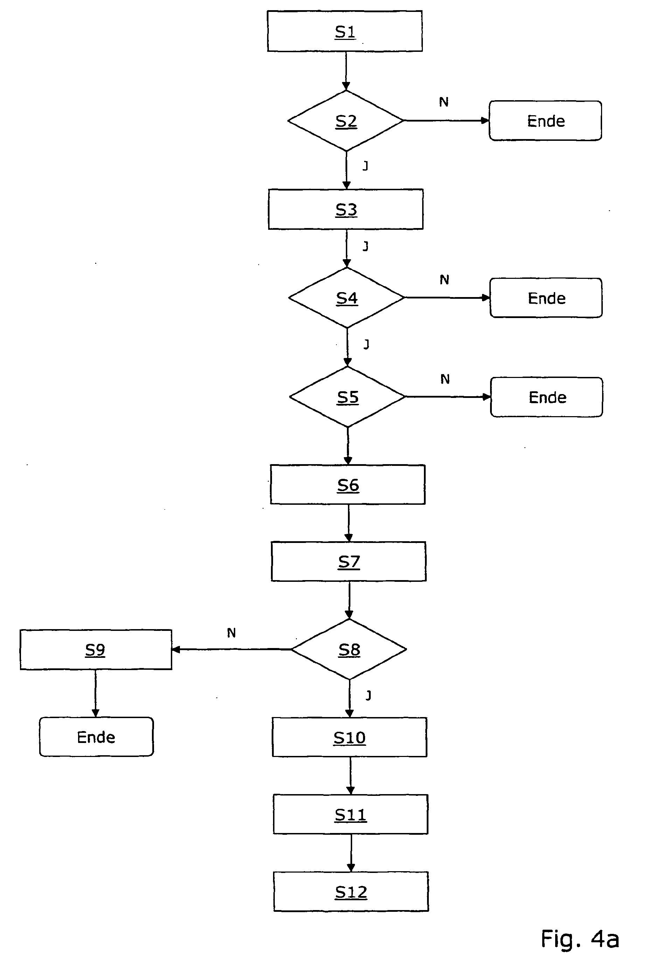

**Fig. 3** zeigt ein erfindungsgemäßes Verfahren zur Fernkommunikation zwischen der Maschinensteuerung 3, dem zentralen Computer 21, dem Servicecomputer 2 sowie dem weiteren Servicecomputer 32 von Fig. 2. In einem ersten Verfahrensabschnitt **V1,** der in Fig. 4a näher beschrieben ist, wird die Fernkommunikationsverbindung zwischen der Maschinensteuerung 3 und dem zentralen Computer 21 aufgebaut. Nach dem Aufbau der Fernkommunikationsverbindung zwischen der Maschinensteuerung 3 und dem zentralen Computer 21 erfolgt in einem Schritt **S13** eine Abfrage, ob der Fernzugriff auf die Maschinensteuerung 3 durch einen Servicecomputer 2 zugelassen werden soll. Die Initiative zur Einbindung eines Servicecomputers 2 in das Fernkommunikationssystem 20 kann von dem zentralen Computer 21 oder von einem Servicecomputer 2 bzw. dem zugehörigen Servicemitarbeiter ausgehen.

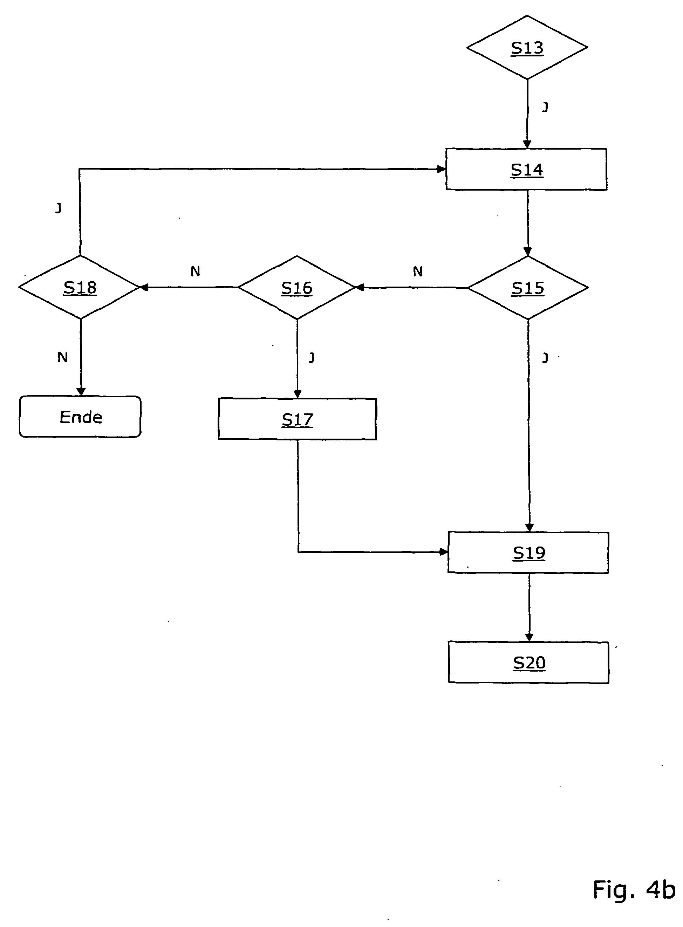

Ist ein Servicecomputer 2 erforderlich (J in Schritt S13), wird das Verfahren mit einem zweiten Verfahrensabschnitt **V2** fortgesetzt, der in Fig. 4b im Detail beschrieben wird. Nach dem zweiten Verfahrensabschnitt V2 erfolgt in einem Schritt **S21** eine Abfrage, ob ein weiterer Servicecomputer 32 als Secondary U-ser in das Fernkommunikationssystem 20 eingebunden werden soll. Ein Secondary User wird nur dann in das Fernkommunikationssystem 20 eingebunden, wenn bereits ein Primary User eingebunden ist.

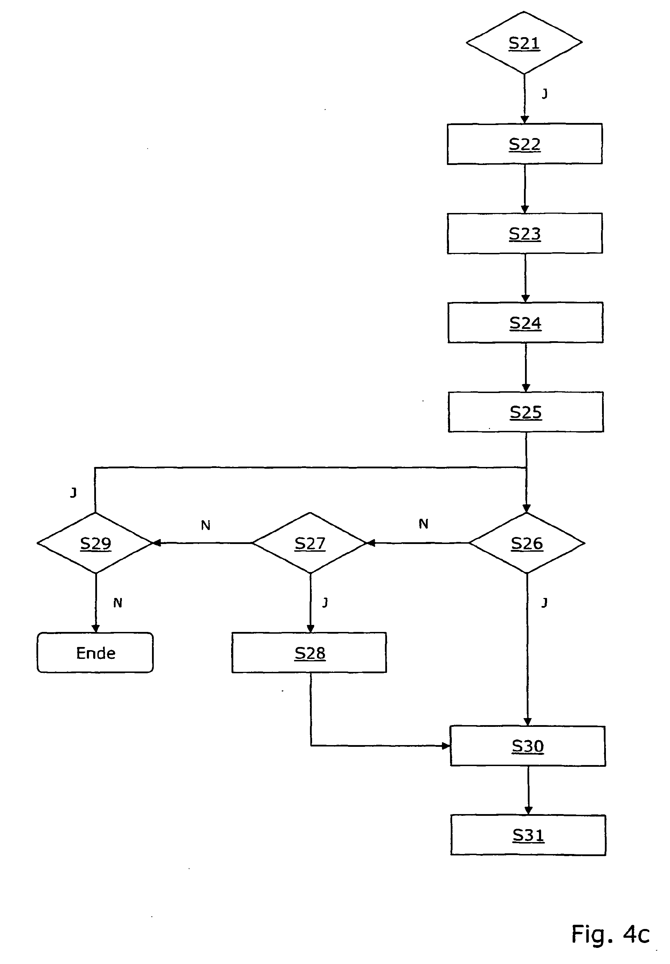

Wenn ein weiterer Servicecomputer 32 als Secondary User in das Fernkommunikationssystem 20 eingebunden werden soll (J in Schritt S21), wird das Verfahren mit einem dritten Verfahrensabschnitt **V3** fortgesetzt, der in Fig. 4c im Detail beschrieben wird. Nach dem dritten Verfahrensabschnitt V3 oder wenn kein Servicecomputer 2 als Primary User (N in Schritt S13) oder kein weiterer Servicecomputer als Secondary User (N in Schritt S21) in das Fernkommunikationssystem 20 eingebunden werden soll, erfolgt in einem Schritt **S14** der Fernzugriff auf die Maschinensteuerung 3. Über den Fernzugriff auf die Maschinensteuerung 3 können eine Wartung der Maschine 4, das Einspielen von Softwareupdates oder eine Fehlerbehebung durchgeführt werden.

**Fig. 4a** zeigt den ersten Verfahrensabschnitt V1 des in Fig. 3 beschriebenen erfindungsgemäßen Verfahrens, in dem eine Fernkommunikationsverbindung zwischen der Maschinensteuerung 3 und dem zentralen Computer 21 aufgebaut wird. Dabei kann die Initiative zur Fernkommunikation von der Maschinensteuerung 3 oder dem zentralen Computer 21 ausgehen. Bei einem Fehlerereignis der Maschine 4 geht die Initiative zur Fernkommunikation grundsätzlich 4 oder dem Einspielen von Software-Updates auf die Maschinensteuerung 3 die Initiative zur Fernkommunikation von dem zentralen Computer 21 ausgehen kann.

Geht die Initiative zur Fernkommunikation von dem zentralen Computer 21 aus, um bspw. ein Software-Update auf der Maschinensteuerung 3 zu installieren, sendet der zentrale Computer 21 in einem Schritt **S1** eine Anfrage für einen Fernzugriff an die Maschinensteuerung 3 oder den Maschinenbediener der Maschine 4. Die Anfrage kann bspw. per Email an die Maschinensteuerung 3 oder per SMS an den Maschinenbediener gesendet werden. Aus Gründen der Datensicherheit sollte der Maschinenbediener dem Fernzugriff auf die Maschinensteuerung 3 zustimmen, bspw. durch eine Schalterstellung. Der Aufbau der Kommunikationsverbindung 8 zwischen der Maschinensteuerung 3 und dem zentralen Computer 21, die bevorzugt als VPN-Verbindung ausgebildet ist, erfolgt erst, nachdem der Maschinenbediener oder die Maschinensteuerung 3 dem Verbindungsaufbau zugestimmt hat. In einem Schritt **S2** entscheidet der Maschinenbediener oder die Maschinensteuerung 3, ob ein Fernzugriff auf die Maschine 4 zugelassen wird. Verweigert der Maschinenbediener oder die Maschinensteuerung 3 den Fernzugriff (N in Schritt S2), sind der erste Verfahrensabschnitt V1 und damit das erfindungsgemäße Verfahren zur Fernkommunikation nach Schritt S2 beendet.

Wenn der Maschinenbediener oder die Maschinensteuerung 3 den Fernzugriff zulassen (J in Schritt S2), oder wenn die Initiative zur Fernkommunikation von der Maschinensteuerung 3 ausgeht, versucht die Maschinensteuerung 3 in einem Schritt **S3** eine Kommunikationsverbindung 8 zu dem zentralen Computer 21 aufzubauen. In einem Schritt **S4** überprüft die Maschinensteuerung 3, ob eine Kommunikationsverbindung 8 zu dem zentralen Computer 21 aufgebaut werden konnte. Konnte eine Kommunikationsverbindung 8 zu dem zentralen Computer 21 aufgebaut werden (J in Schritt S4), überprüft die Maschinensteuerung 3 in einem Schritt **S5,** ob der zentrale Computer 21 erreichbar ist. Ist der zentrale Computer 21 erreichbar ist (J in Schritt S5), startet die Maschinensteuerung 3 in einem Schritt **S6** die installierte Telepräsenzsoftware, bspw. die Software pcAnywhere des Herstellers Symantec.

Wenn keine Kommunikationsverbindung 8 zu dem zentralen Computer 21 aufgebaut werden konnte (N in Schritt S4) oder der zentrale Computer 21 nicht erreichbar ist (N in Schritt S5), sind der erste Verfahrensabschnitt V1 und damit das erfindungsgemäße Verfahren zur Fernkommunikation nach Schritt S3 beendet.

Nach Schritt S6 oder wenn der zentrale Computer 21 erreichbar ist (J in Schritt S3), sendet die Maschinensteuerung 3 in einem Schritt **S7** die Identifizierungsdaten der Maschine 4 an den zentralen Computer 21. Die Identifizierungsdaten enthalten sämtliche Daten zur Identifikation der Maschine 4 (Maschinennummer, Passwort) und zum Aufbau der Maschinensteuerung 3 (Betriebssystem, Anwendungsprogramme). In einem Schritt **S8** erfolgt eine Überprüfung der Identifizierungsdaten der Maschine 4. Sind die Identifizierungsdaten ungültig (N in Schritt S8), wird die Kommunikationsverbindung 8 in einem Schritt **S9** beendet und der erste Verfahrensabschnitt V1 ist nach Schritt S9 beendet. Sind die Identifizierungsdaten gültig (J in Schritt S8), ermittelt der Portalmanager 25 in einem Schritt **S10** anhand der übermittelten Identifizierungsdaten eine für die Maschinensteuerung 3 geeignete virtuelle Maschinenvorlage 28a und erzeugt durch Kopieren der virtuellen Maschinenvorlage 28a auf den VM-Server 26 eine lauffähige virtuelle Maschine 29. In einem Schritt **S11** wird die virtuelle Maschine 29 mit den vorgesehenen Anwendungen gestartet. Zu den Anwendungen zählt bspw. die Telepräsenzsoftware, die für einen Fernzugriff auf die Maschinensteuerung 3 erforderlich ist. In einem Schritt **S12** wird über die Kommunikationsverbindung 8 eine Remote-Verbindung 30 zwischen der virtuellen Maschine 29 und der Maschinensteuerung 3 hergestellt. Nach Schritt S12 ist die Fernkommunikationsverbindung zwischen der Maschinensteuerung 3 und dem zentralen Computer 21 aufgebaut und der erste Verfahrensabschnitt V1 beendet.

**Fig. 4b** zeigt den zweiten Verfahrensabschnitt V2 mit der Einbindung eines Servicecomputers 2 als Primary User in das Fernkommunikationssystem 20 von Fig. 2. In Schritt S13 erfolgt die Abfrage, ob der Fernzugriff auf die Maschinensteuerung 3 über einen Servicecomputer 2 ausgeführt werden soll. Bei einem Fehlerereignis der Maschine 4 ist ein Servicecomputer 2 erforderlich, um den Fehler per Fernzugriff auf die Maschine 4 zu beheben. Das Einspielen von Software-Updates oder das Übermitteln von Maschinendaten an den zentralen Computer 21 kann auch ohne Servicecomputer 2 durchgeführt werden.

Wenn ein Servicecomputer 2 eingebunden werden soll (J in Schritt S13), ermittelt der zentrale Computer 21 in einem Schritt **S14** einen geeigneten Servicecomputer 2, der den Fernzugriff auf die Maschinensteuerung 3 ausführen kann. In einem Schritt **S15** überprüft der Portalmanager 25, ob der Servicecomputer 2 bereits über eine Kommunikationsverbindung 9 mit dem zentralen Computer 21 verbunden ist. Ist der Servicecomputer 2 nicht mit dem zentralen Computer 21 verbunden (N in Schritt S15), überprüft der Portalmanager 25 in einem Schritt **S16,** ob der Servicecomputer 2 erreichbar ist. Wenn der Servicecomputer 2 erreichbar ist (J in Schritt S16), wird in einem Schritt **S17** die Kommunikationsverbindung 9 von dem zentralen Computer 21 zu dem Servicecomputer 2 hergestellt. Ist der Servicecomputer 2 nicht erreichbar ist (N in Schritt S16), überprüft der Portalmanager 25 in einem Schritt **S18**, ob ein anderer Servicecomputer 2 den Fernzugriff auf die Maschinensteuerung 3 ausführen kann. Wenn ein anderer Servicecomputer 2 den Fernzugriff ausführen kann (J in Schritt S18), wird das Verfahren mit Schritt S14 fortgesetzt. Gibt es keinen anderen Servicecomputer 2, der den Fernzugriff ausführen kann, ist der zweite Verfahrensabschnitt V2 nach Schritt S18 beendet.

Nach Schritt S17 oder, wenn der Servicecomputer 2 bereits über eine Kommunikationsverbindung 9 mit dem zentralen Computer 21 verbunden ist (J in Schritt S15), werden die Verbindungsdaten der virtuellen Maschine 29 in einem Schritt **S19** an den Servicecomputer 2 übermittelt. Über eine Remote-Verbindung 31 wird in einem Schritt **S20** eine Verbindung von dem Servicecomputer 2 zu der virtuellen Maschine 29 hergestellt. Nach Schritt S20 ist das Fernkommunikationssystem 20 zwischen der Maschinensteuerung 3, dem zentralen Computer 21 und dem Servicecomputer 2 aufgebaut und der zweite Verfahrensabschnitt V2 beendet.

Die Initiative zur Einbindung eines Servicecomputers 2 in das Fernkommunikationssystem 20 kann auch direkt von einem Servicecomputer 2 bzw. dem zugehörigen Servicemitarbeiter ausgehen, wenn die Kommunikationsverbindung 9 zwischen dem Servicecomputer 2 und dem zentralen Computer 21 aktiv ist. Der Servicemitarbeiter fragt die Verbindungsdaten der virtuellen Maschine 29, die einer bestimmten Maschine 4 zugeordnet und an die Maschine 4 angepasst ist, über die Maschinennummer beim Portalmanager 25 ab.

**Fig. 4c** zeigt den dritten Verfahrensabschnitt V3 mit der Einbindung eines weiteren Servicecomputers 32 als Secondary User in das Fernkommunikationssystem 20. In Schritt S21 erfolgte die Abfrage, ob ein weiterer Servicecomputer 32 als Secondary User in das Fernkommunikationssystem 20 eingebunden werden soll. Wenn ein weiterer Servicecomputer 2 eingebunden werden soll (J in Schritt S21), übermittelt der Primary User 2 in einem Schritt **S22** einen Auftrag an den Portalmanager 25, einen Fernzugriff auf die Maschinensteuerung 3 durch einen weiteren Servicecomputer 32 zu ermöglichen.

In einem Schritt **S23** erstellt der Portalmanager 25 auf dem VM-Server 26 eine weitere lauffähige virtuelle Maschine 34, die als Kopie der virtuellen Maschinenvorlage 28e erzeugt wird. Die weitere virtuelle Maschine 34 wird in einem Schritt **S24** gestartet und in einem Schritt **S25** wird eine Remote-Verbindung 35 von der weiteren virtuellen Maschine 34 zu der virtuellen Maschine 29 hergestellt.

Der Portalmanager 25 überprüft in einem Schritt **S26,** ob der weitere Servicecomputer 32 bereits über eine Kommunikationsverbindung 33 mit dem zentralen Computer 21 verbunden ist. Ist der weitere Servicecomputer 32 nicht mit dem zentralen Computer 21 verbunden (N in Schritt S26), wird in einem Schritt **S27** überprüft, ob der weitere Servicecomputer 32 erreichbar ist. Wenn der weitere Servicecomputer 32 erreichbar ist (J in Schritt S27), wird in einem Schritt **S28** die Kommunikationsverbindung 33 von dem zentralen Computer 21 zu dem weiteren Servicecomputer 32 hergestellt. Ist der weitere Servicecomputer 32 nicht erreichbar ist (N in Schritt S27), wird in einem Schritt **S29** überprüft, ob ein anderer Servicecomputer 32 den Fernzugriff auf die Maschinensteuerung 3 als Secondary User ausführen kann. Wenn ein anderer Servicecomputer 32 den Fernzugriff ausführen kann (J in Schritt S29), wird das Verfahren mit Schritt S26 fortgesetzt. Gibt es keinen anderen Servicecomputer 32, ist der dritte Verfahrensabschnitt V3 nach Schritt S29 beendet.

Nach Schritt S28 oder, wenn der weitere Servicecomputer 32 bereits über eine Kommunikationsverbindung 33 mit dem zentralen Computer 21 verbunden ist (*J* in Schritt S26), werden in einem Schritt **S30** die Verbindungsdaten der weiteren virtuellen Maschine 34 an den weiteren Servicecomputer 32 übermittelt. In einem Schritt **S31** wird eine Remote-Verbindung 36 von dem weiteren Servicecomputer 32 zu der weiteren virtuellen Maschine 34 hergestellt. Nach Schritt S31 ist das Fernkommunikationssystem 20 zwischen der Maschinensteuerung 3, dem zentralen Computer 21, dem Servicecomputer 2 als Primary User und dem weiteren Servicecomputer 32 als Secondary User aufgebaut und der dritte Verfahrensabschnitt V3 beendet.

Die Initiative zur Einbindung eines weiteren Servicecomputers 32 als Secondary User in das Fernkommunikationssystem 20 kann auch direkt von einem Servicecomputer 32 bzw. dem zugehörigen Servicemitarbeiter ausgehen, wenn die Kommunikationsverbindung 33 zwischen dem Servicecomputer 32 und dem zentralen Computer 21 aktiv ist. Der Servicemitarbeiter fragt über die Maschinennummer beim Portalmanager 25 die Verbindungsdaten einer Maschine 4 ab. Sollte bereits ein Servicecomputer 2 mit der zugehörigen virtuellen Maschine 29 verbunden sein, kann der Servicemitarbeiter eine Einbindung als Secondary User in das Fernkommunikationssystem 20 beantragen.

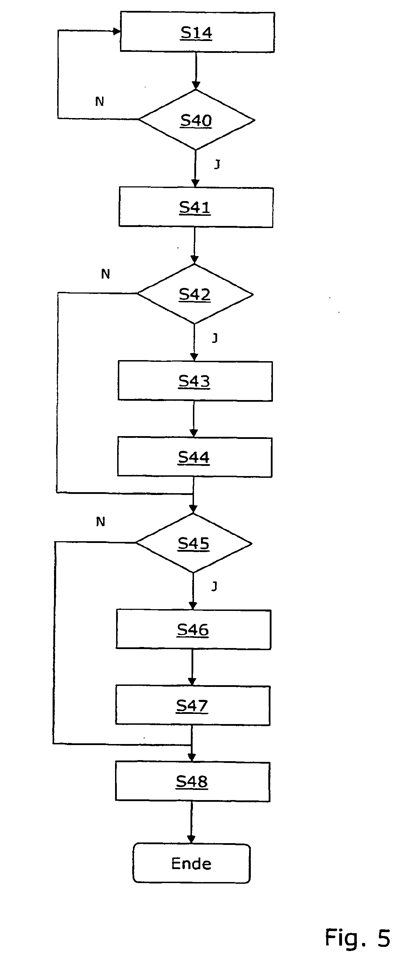

**Fig. 5** zeigt ein erfindungsgemäßes Verfahren zum Beenden der Fernkommunikation zwischen der Maschinensteuerung 3, dem zentralen Computer 21 und einem oder mehreren Servicecomputern 2, 32. Nachdem in Schritt S14 (Fig. 3) der Fernzugriff auf die Maschinensteuerung 3 durchgeführt wurde, erfolgt in einem Schritt **S40** eine Abfrage, ob der Fernzugriff auf die Maschinensteuerung 3 beendet ist. Wenn der Fernzugriff nicht beendet ist (N in Schritt S40), wird das Verfahren mit Schritt S14 fortgesetzt. Ist der Fernzugriff auf die Maschinensteuerung 3 hingegen beendet (J in Schritt S40), werden in einem Schritt **S41** alle relevanten Daten und Protokolle auf den Datenserver 27 des zentralen Computers 21 gespeichert. Nach der Speicherung wird in einem Schritt **S42** überprüft, ob ein Secondary User 32 in das Fernkommunikationssystem 20 eingebunden ist. Ist ein Secondary User 32 eingebunden (J in Schritt S42), werden in einem Schritt **S43** die Remote-Verbindung 36 des Servicecomputers 32 zu der weiteren virtuellen Maschine 34, die weitere virtuelle Maschine 34 und die Kommunikationsverbindung 33 zwischen dem weiteren Servicecomputer 33 und dem zentralen Computer 21 beendet. In einem Schritt **S44** löscht der Portalmanager 25 die weitere virtuelle Maschine 34.

Nach Schritt S44 oder wenn kein Secondary User 32 in das Fernkommunikationssystem 20 eingebunden war (N in Schritt S42), wird in einem Schritt **S45** überprüft, ob ein Primary User 2 in das Fernkommunikationssystem 20 eingebunden ist. Ist ein Primary User 2 eingebunden (J in Schritt S45), werden in einem Schritt **S46** die Remote-Verbindung 31 des Servicecomputers 2 zu der virtuellen Maschine 29, die virtuelle Maschine 29 und die Kommunikationsverbindung 9 zwischen dem Servicecomputer 2 und dem zentralen Computer 21 beendet. In einem Schritt **S47** löscht der Portalmanager 25 die virtuelle Maschine 29.

Nach Schritt S47 oder wenn kein Primary User 2 in das Fernkommunikationssystem 20 eingebunden war (N in Schritt S45), wird in einem Schritt **S48** die Kommunikationsverbindung 8 zwischen der Maschinensteuerung 3 und dem zentralen Computer 21 beendet. Nachdem alle Kommunikationsverbindungen 8, 9, 33 und Remote-Verbindungen 30, 31, 35, 36 beendet wurden, ist das erfindungsgemäße Verfahren zur Fernkommunikation nach Schritt S48 beendet.

## Patentansprüche

1. System (20) zur Fernkommunikation zwischen einem zentralen Computer (21) und mindestens einer Maschinensteuerung (3), die zur Übermittlung ihrer Identifizierungsdaten an den zentralen Computer (21) ausgebildet ist und über eine Kommunikationsverbindung (8) mit einer virtuellen Maschine (29) des zentralen Computers (21) verbindbar ist, wobei die virtuelle Maschine (29) an die Maschinensteuerung (3) und an die Kommunikationsverbindung (8) angepasst ist,
**dadurch gekennzeichnet,**
**dass** der zentrale Computer (21) einen VM-Server (26) zum Anlegen und Starten virtueller Maschinen aufweist,
**dass** der zentrale Computer (21) mehrere virtuelle Maschinenvorlagen (28a-28d), welche für unterschiedliche Arten von Maschinensteuerungen (3) und Kommunikationsverbindungen (8) ausgebildet sind, aufweist,
**dass** der zentrale Computer (21) einen Portalmanager (25) aufweist, der dazu ausgebildet ist, anhand der von einer Maschinensteuerung (3) übermittelten Identifizierungsdaten aus den mehreren virtuellen Maschinenvorlagen (28a-28d) eine für die Maschinensteuerung (3) geeignete virtuelle Maschinenvorlage (28a-28d) zu ermitteln und durch Kopieren dieser ermittelten geeigneten virtuellen Maschinenvorlage (28a-28d) eine lauffähige virtuelle Maschine (29) auf dem VM-Server (26) zu erzeugen,
**dass** jede virtuelle Maschine (29) des zentralen Computers (21) eine auf dem VM-Server (26) lauffähig eingebundene Kopie derjenigen geeigneten virtuellen Maschinenvorlage ist, die an die jeweilige Maschinensteuerung (3) und an die jeweilige Kommunikationsverbindung (8) angepasst ist,
**dass** der Fernzugriff auf die Maschinensteuerung (3) mittels einer über die aktive Kommunikationsverbindung (8) laufenden Remote-Verbindung (30) zwischen der Maschinensteuerung (3) und der virtuellen Maschine (29) erfolgt,
**dass**, wenn ein Servicecomputer (2) beim Portalmanager (25) die Verbindungsdaten der virtuellen Maschine (29) angefragt hat, zwischen dem Servicecomputer (2) und der virtuellen Maschine (29) eine Remote-Verbindung (31) aufgebaut ist, wobei der Benutzer, der zunächst die Remote-Verbindung (30) zu der Maschinensteuerung (3) herstellt, als Primary User bezeichnet wird,
**dass**, wenn ein Benutzer von einem weiteren Servicecomputer (32) gleichzeitig auf die Maschinensteuerung (3) zugreifen möchte, eine Remote-Verbindung (36) zu einer virtuellen Maschine (34) aufgebaut ist, wobei dieser Benutzer als Secondary User bezeichnet wird, und
**dass** zwischen der virtuellen Maschine (29) des Primary User und der virtuellen Maschine (34) des Secondary User eine Remote-Verbindung (35) besteht, anhand derer die virtuelle Maschine (34) auf die Maschinensteuerung (3) zugreift, wobei der Primary User die Zugriffsrechte des Secondary User festlegt.

2. System nach Anspruch 1, **dadurch gekennzeichnet, dass** der zentrale Computer (21) einen Datenserver (27) aufweist oder mit einem Datenserver (27) verbunden ist, um Daten von der Maschinensteuerung (3) oder auf die Maschinensteuerung (3) zu kopieren.

3. Verfahren zur Fernkommunikation zwischen einem zentralen Computer (21) und mindestens einer Maschinensteuerung (3), bei dem von der Maschinensteuerung (3) Identifizierungsdaten an den zentralen Computer (21) übermittelt werden und zwischen der Maschinensteuerung (3) und einer virtuellen Maschine (29) des zentralen Computers (21) eine Kommunikationsverbindung (8) hergestellt wird,
**dadurch gekennzeichnet,**
**dass** anhand der übermittelten Identifizierungsdaten aus mehreren virtuellen Maschinenvorlagen (28a-28d) des zentralen Computers (21), welche für unterschiedliche Arten von Maschinensteuerungen (3) und Kommunikationsverbindungen (8) ausgebildet sind, diejenige virtuelle Maschinenvorlage, die an die jeweilige Maschinensteuerung (3) und an die jeweilige Kommunikationsverbindung (8) angepasst ist, ausgewählt wird,
**dass** mindestens eine Kopie dieser ausgewählten virtuellen Maschinenvorlage als lauffähige virtuelle Maschine (29) in einen VM-Server (26) des zentralen Computers (21) eingebunden wird,
**dass** eine Kommunikationsverbindung (8) zwischen der Maschinensteuerung (3) und der virtuellen Maschine (29) des VM-Servers (26) hergestellt wird, dass der Fernzugriff auf die Maschinensteuerung (3) mittels einer über die aktive Kommunikationsverbindung (8) laufenden Remote-Verbindung (30) zwischen der Maschinensteuerung (3) und der virtuellen Maschine (29) erfolgt,
**dass**, wenn ein Servicecomputer (2) beim Portalmanager (25) die Verbindungsdaten der virtuellen Maschine (29) angefragt hat, zwischen dem Servicecomputer (2) und der virtuellen Maschine (29) eine Remote-Verbindung (31) aufgebaut wird, wobei der Benutzer, der zunächst die Remote-Verbindung (30) zu der Maschinensteuerung (3) herstellt, als Primary User bezeichnet wird,
**dass**, wenn ein Benutzer von einem weiteren Servicecomputer (32) gleichzeitig auf die Maschinensteuerung (3) zugreifen möchte, eine Remote-Verbindung (36) zu einer virtuellen Maschine (34) aufgebaut ist, wobei dieser Benutzer als Secondary User bezeichnet wird, und
**dass** zwischen der virtuellen Maschine (29) des Primary User und der virtuellen Maschine (34) des Secondary User eine Remote-Verbindung (35) besteht, anhand derer die virtuelle Maschine (34) auf die Maschinensteuerung (3) zugreift, wobei der Primary User die Zugriffsrechte des Secondary User festlegt.

4. Verfahren nach Anspruch 3, **dadurch gekennzeichnet, dass** jede virtuelle Maschine (29, 34) nach Beenden ihrer Fernkommunikation beendet und anschließend auf dem zentralen Computer (21) gelöscht wird.

## Claims

1. System (20) for remote communication between a central computer (21) and at least one machine control (3) which is designed to transmit its identification data to the central computer (21) and can be connected via a communication connection (8) to a virtual machine (29) of the central computer (21), wherein the virtual machine (29) is adapted to the machine control (3) and to the communication connection (8),
**characterized in that**
the central computer (21) comprises a VM server (26) for creating and starting virtual machines,
the central computer (21) comprises a plurality of virtual machine templates (28a-28d) which are designed for different types of machine controls (3) and communication connections (8),
the central computer (21) comprises a portal manager (25) which is designed to determine on the basis of the identification data transmitted by a machine control (3) from the plurality of virtual machine templates (28a-28d) a virtual machine template (28a-28d) which is suitable for the machine control (3) and to generate an operational virtual machine (29) on the VM server (26) through copying this determined suitable virtual machine template (28a-28d),
each virtual machine (29) of the central computer (21) is a copy, which is operably integrated on the VM server (26), of that suitable virtual machine template which is adapted to the respective machine control (3) and to the respective communication connection (8),
remote access to the machine control (3) is performed by means of a remote connection (30) between the machine control (3) and the virtual machine (29), which runs via the active communication connection (8),
if a service computer (2) has requested the connection data of the virtual machine (29) from the portal manager (25), a remote connection (31) is established between the service computer (2) and the virtual machine (29), wherein the user, who initially establishes the remote connection (30) to the machine control (3) is referred to as primary user,
if a user wants to access the machine control (3) simultaneously from a further service computer (32), a remote connection (36) to a virtual machine (34) is established, wherein this user is referred to as secondary user, and
between the virtual machine (29) of the primary user and the virtual machine (34) of the secondary user, a remote connection (35) exists, by means of which the virtual machine (34) accesses the machine control (3), wherein the primary user determines the access rights of the secondary user.

2. System according to claim 1, **characterized in that** the central computer (21) comprises a data server (27) or is connected to a data server (27) in order to copy data from the machine control (3) or to the machine control (3).

3. Method of remote communication between a central computer (21) and at least one machine control (3), in which the machine control (3) transmits identification data to the central computer (21) and a communication connection (8) is established between the machine control (3) and a virtual machine (29) of the central computer (21),
**characterized in that**
by means of the transmitted identification data, that virtual machine template which is adapted to the respective machine control (3) and to the respective communication connection (8) is selected from a plurality of virtual machine templates (28a-28d) of the central computer (21), which are designed for different types of machine controls (3) and communication connections (8), at least one copy of this selected virtual machine template is integrated as operable virtual machine (29) in a VM server (26) of the central computer (21), a communication connection (8) is established between the machine control (3) and the virtual machine (29) of the VM server (26),
the remote access to the machine control (3) is performed by means of a remote connection (30) between the machine control (3) and the virtual machine (29), which runs via the active communication connection (8),
if a service computer (2) has requested the connection data of the virtual machine (29) from the portal manager (25), a remote connection (31) is established between the service computer (2) and the virtual machine (29), wherein the user, who initially establishes the remote connection (30) to the machine control (3) is referred to as primary user,
if a user wants to access the machine control (3) simultaneously from a further service computer (32), a remote connection (36) to a virtual machine (34) is established, wherein this user is referred to as secondary user, and
between the virtual machine (29) of the primary user and the virtual machine (34) of the secondary user, a remote connection (35) exists, by means of which the virtual machine (34) accesses the machine control (3), wherein the primary user determines the access rights of the secondary user.

4. Method according to claim 3, **characterized in that** each virtual machine (29, 34) is terminated after termination of the remote communication thereof, and is subsequently deleted on the central computer (21).

## Revendications

1. Système (20) de communication à distance entre un ordinateur central (21) et au moins une commande de machine (3) qui est conçue pour transmettre ses données d'identification à l'ordinateur central (21) et qui peut être reliée à une machine virtuelle (29) de l'ordinateur central (21) par une liaison de communication (8), la machine virtuelle (29) étant adaptée à la commande de machine (3) et à la liaison de communication (8),
**caractérisé en ce**
**que** l'ordinateur central (21) présente un serveur de machines virtuelles (26) pour créer et démarrer des machines virtuelles,
**que** l'ordinateur central (21) présente plusieurs modèles de machine virtuelle (28a-28d), lesquels sont conçus pour différents types de commandes de machine (3) et liaisons de communication (8),
**que** l'ordinateur central (21) présente un gestionnaire de portail (25) qui est conçu pour, à partir des données d'identification transmises par une commande de machine (3), déterminer parmi lesdits plusieurs modèles de machine virtuelle (28a-28d) un modèle de machine virtuelle (28a-28d) approprié pour la commande de machine (3) et, par copie de ce modèle de machine virtuelle (28a-28d) approprié déterminé, générer une machine virtuelle (29) exécutable sur le serveur de machines virtuelles (26),
**que** chaque machine virtuelle (29) de l'ordinateur central (21) est une copie intégrée sous forme exécutable sur le serveur de machines virtuelles (26) du modèle de machine virtuelle approprié qui est adapté à la commande de machine (3) respective et à la liaison de communication (8) respective,
**que** l'accès à distance à la commande de machine (3) s'effectue au moyen d'une connexion à distance (30), passant par la liaison de communication (8) active, entre la commande de machine (3) et la machine virtuelle (29),
**que**, lorsqu'un ordinateur de service (2) a demandé auprès du gestionnaire de portail (25) les données de connexion de la machine virtuelle (29), une connexion à distance (31) est établie entre l'ordinateur de service (2) et la machine virtuelle (29), l'utilisateur qui établit en premier lieu la connexion à distance (30) avec la commande de machine (3) étant désigné comme Primary User,
**que**, lorsqu'un utilisateur d'un autre ordinateur de service (32) souhaite accéder en même temps à la commande de machine (3), une connexion à distance (36) est établie avec une machine virtuelle (34), cet utilisateur étant désigné comme Secondary User, et
**qu'**il existe entre la machine virtuelle (29) du Primary User et la machine virtuelle (34) du Secondary User une connexion à distance (35) au moyen de laquelle la machine virtuelle (34) accède à la commande de machine (3), le Primary User définissant les droits d'accès du Secondary User.

2. Système selon la revendication 1, **caractérisé en ce que** l'ordinateur central (21) présente un serveur de données (27) ou est relié à un serveur de données (27) pour copier des données de la commande de machine (3) ou sur la commande de machine (3).

3. Procédé de communication à distance entre un ordinateur central (21) et au moins une commande de machine (3), selon lequel des données d'identification sont transmises par la commande de machine (3) à l'ordinateur central (21) et une liaison de communication (8) est établie entre la commande de machine (3) et une machine virtuelle (29) de l'ordinateur central (21),
**caractérisé en ce**
**qu'**à partir des données d'identification transmises, le modèle de machine virtuelle qui est adapté à la commande de machine (3) respective et à la liaison de communication (8) respective est sélectionné parmi plusieurs modèles de machine virtuelle (28a-28d) de l'ordinateur central (21) qui sont conçus pour différents types de commandes de machine (3) et de liaisons de communication (8),
**qu'**au moins une copie de ce modèle de machine virtuelle sélectionné est intégrée sous forme de machine virtuelle (29) exécutable dans un serveur de machines virtuelles (26) de l'ordinateur central (21),
**qu'**une liaison de communication (8) est établie entre la commande de machine (3) et la machine virtuelle (29) du serveur de machines virtuelles (26),
**que** l'accès à distance à la commande de machine (3) s'effectue au moyen d'une connexion à distance (30), passant par la liaison de communication (8) active, entre la commande de machine (3) et la machine virtuelle (29),
**que**, lorsqu'un ordinateur de service (2) a demandé auprès du gestionnaire de portail (25) les données de connexion de la machine virtuelle (29), une connexion à distance (31) est établie entre l'ordinateur de service (2) et la machine virtuelle (29), l'utilisateur qui établit en premier lieu la connexion à distance (30) avec la commande de machine (3) étant désigné comme Primary User,
**que**, lorsqu'un utilisateur d'un autre ordinateur de service (32) souhaite accéder en même temps à la commande de machine (3), une connexion à distance (36) est établie avec une machine virtuelle (34), cet utilisateur étant désigné comme Secondary User, et
**qu'**il existe entre la machine virtuelle (29) du Primary User et la machine virtuelle (34) du Secondary User une connexion à distance (35) au moyen de laquelle la machine virtuelle (34) accède à la commande de machine (3), le Primary User définissant les droits d'accès du Secondary User.

4. Procédé selon la revendication 3, **caractérisé en ce que** chaque machine virtuelle (29, 34) est arrêtée à la fin de sa communication à distance et ensuite supprimée sur l'ordinateur central (21).
